# EUROPEAN PATENT SPECIFICATION

(11) **EP 0 549 940 B1**
(45) Date of publication and mention of the grant of the patent: **20.03.1996**
(21) Application number: 92121183.5
(22) Date of filing: 11.12.1992
(51) Int. Cl.: B60Q 1/04

(54) **Optical unit for vehicles**
Optische Einheit für Fahrzeuge
Bloc optique pour véhicule

(30) Priority: 17.12.1991 IT TO910993
(43) Date of publication of application: 07.07.1993
(73) Proprietor: CARELLO S.p.A., I-10135 Torino (IT)
(72) Inventor: Valente, Franco, I-10100 Torino (IT)
(74) Representative: Jorio, Paolo

(56) References cited:
- US-A- 3 385 961

## Description

This invention relates to an optical unit for vehicles.

The optical units normally used in the motor industry are mounted on the body shells of vehicles manually by an operator, who fits the headlamps forming each optical unit within seats provided in the body shell itself, inserting the stop members with which the headlamps are provided into corresponding slotted holes, and then fixes the said projector onto the body shell using corresponding fixing members.

Because body shells have shape and dimensional tolerances, the presence of the slotted holes is necessary to allow the operator to move the headlamps within their corresponding seats in order to position the said headlamps correctly.

The said optical units have a disadvantage mainly due to the fact that the headlamps in the optical unit must necessarily be correctly positioned by the operator before they are secured to the body shell. This positioning operation requires an appreciable length of time in view of the fact that it is performed while the vehicle is being assembled on the vehicle assembly line, and therefore represents a bottleneck in the manufacturing process.

The object of this invention is to provide an optical unit for vehicles which diminishes the disadvantage described above.

In particular it is an object to provide a unit which elliminates operations requiring horizontal allignment of both headlamps in relation to one another.

In accordance with this invention an optical unit is provided for vehicles comprising a first and a second headlamp, characterised in that it also comprises at least one connecting member which extends between and connects the said first and the said second headlamp; the said connecting member having an adjustable length, and in turn comprising a securing member for securing the said connecting member in a position in which the said first and the said second headlamps are located and held integrally with respect to each other at a predetermined distance.

The invention will now be described with reference to the appended drawings which illustrate a non-restrictive embodiment thereof, in which:
Figure 1 is a front view of a preferred embodiment of the optical unit for vehicles according to this invention.
Figure 2 is a view in elevation of the optical unit in Figure 1,
Figure 3 is perspective view of a detail of the optical unit in Figure 1, and
Figure 4 illustrates, with parts in cross-section and with parts removed for clarity, a cross-section along the line IV-IV in Figure 1.

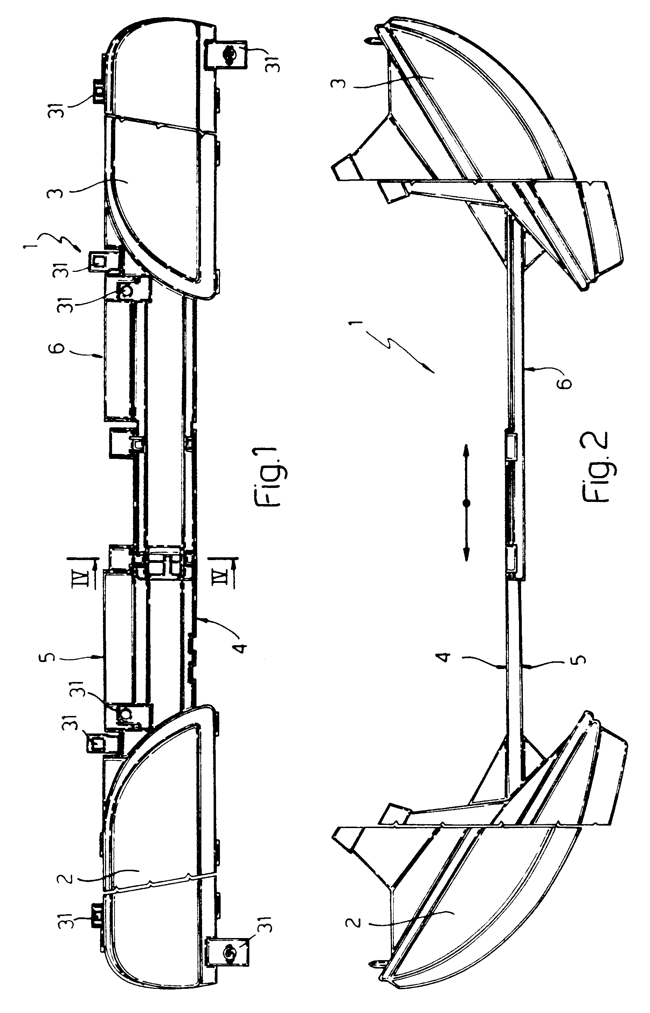

With reference to Figure 1, 1 indicates as a whole an optical unit for vehicles comprising a first headlamp 2 and a second headlamp 3, and a crosspiece or connection member 4 which integrally connects headlamps 2 and 3 with each other.

Connection member 4 is located transversely to the optical axes (not illustrated) of headlamps 2 and 3, between two walls which substantially face headlamps 2 and 3, and comprises a pair of bars 5 and 6, each of which extends from one corresponding headlamp 2, 3 towards the other headlamp 3, 2.

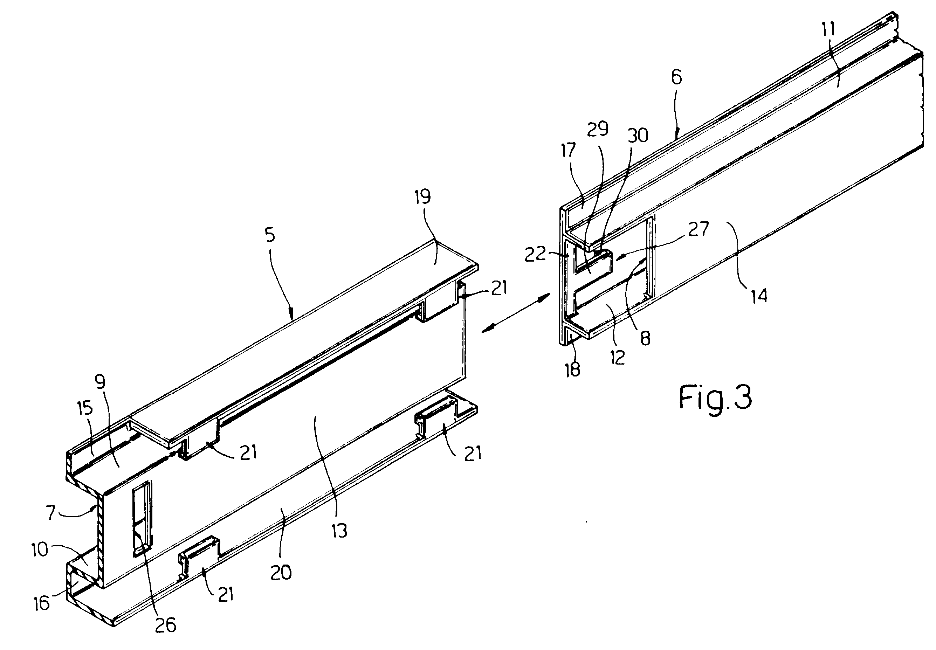

As is more particularly illustrated in Figure 3, bars 5 and 6 each comprise a U-shaped beam 7, 8 whose corresponding walls 9 and 10, 11 and 12, which are parallel and facing each other, are normally connected to one another by a corresponding wall 13, 14. Bars 5 and 6 also comprise two rectangular portions 15 and 16, 17 and 18, which extend within corresponding U-shaped beam 7, 8 longitudinally from the free edges of corresponding walls 9 and 10, 11 and 12, and at right angles thereto. In particular portions 15 and 16 are in the same plane as each other and parallel to portions 17 and 18, which are in turn in the same plane as each other.

Bar 5 also comprises two further rectangular portions 19 and 20, each of which extend longitudinally along a terminal portion of bar 5 from the free longitudinal edge of a corresponding portion 15, 16. The further portions 19 and 20 are parallel to each other, and parallel and facing to walls 9 and 10, and in particular each portion 19, 20 is wider than the width of corresponding wall 9, 10. Each portion 19, 20 has a pair of appendages 21 located at the ends of the free edge of corresponding portion 19, 20 and each appendage 21 of portion 19 is juxtaposed with and extends against a corresponding appendage 21 of portion 20.

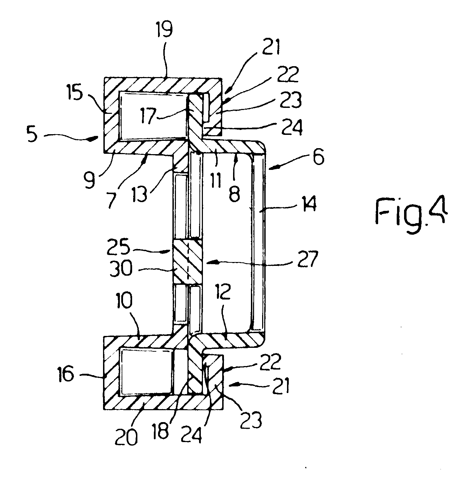

As is more particularly illustrated in Figure 4, each appendage 21 comprises an L-shaped member 22, the longer length portion 23 of which is connected to the free edge of the corresponding portion 19, 20 and extends from the free edge parallel to wall 13.

Shorter length 24 of each appendage 21 extends from corresponding length 23 towards portion 9 over a length such that its distance from wall 13 towards appendages 21 is substantially equal to the thickness of portions 17 and 18 of bar 6.

Bars 5 and 6 are coupled together by means of an axially slidable coupling, portions 17 and 18 of bars 6 being placed between wall 13 and appendages 21.

Connecting member 4 also has a snap locking device capable of axially securing bars 5, 6 with respect to each other. Means 25 makes it possible to immobilise connecting member 4 at a specific length thereof corresponding to the design distance between the two headlamps 2 and 3 when optical unit 1 is mounted on a corresponding body shell (not illustrated).

As illustrated in Figures 3 and 4, means 25 comprises a slot 26, which is made in wall 13 in a terminal portion of the free end of bar 5 and extends transversely to the length of said bar 5. Said slot 26 can have snapped into it an attachment member 27 which is borne by a bridging member 28 transversely connecting the two portions 17 and 18 to the free end of bar 6, coplanar with portions 17 and 18. Attachment member 27 comprises a spring member 29, one end of which is attached to crosspiece 28 and is located parallel to wall 14 and is coplanar with crosspiece 28. The free end of spring member 29 has a prismatic member 30 on the side opposite that facing wall 14, and when this is nested within slot 26 it axially secures one bar 5, 6 with respect to the other 6, 5.

As illustrated in Figure 1, headlamps 2 and 3 and connecting member 4 also have brackets 31 for anchoring the optical unit to a body shell (not illustrated).

In the optical unit described above, headlamps 2 and 3 are held at a design distance from each other, so that headlamps 2 and 3 can be mounted within corresponding seats (not illustrated) provided in the said body shell (not illustrated) in the design position through a single simple operation which follows attachment of optical unit 1 to the body shell (not illustrated).

## Claims

1. An optical unit (1) for vehicles, comprising a first headlamp (2) and a second headlamp (3), characterised in that it also comprises at least one connecting member (4) which extends between and connects the said first headlamp (2) and the said second headlamp (3); the said connecting member (4) being of adjustable length and in turn comprising a securing member (25) for immobilising the said connecting member (4) in a position in which the said first headlamp (2) and the said second headlamp (3) are located and held integrally at a predetermined distance from each other.

2. An optical unit for vehicles according to claim 1, characterised in that the said connecting member (4) comprises a first bar (5) and a second bar (6), each of which extend from one of the corresponding said headlamps (2) (3) towards the other headlamp (3) (2).

3. An optical unit for vehicles according to claim 2, characterised in that the said first bar (5) and the said second bar (6) are connected together by means of an axially slidable coupling.

4. An optical unit for vehicles according to either of claims 2 or 3, characterised in that the said first bar (5) has guide members (21) for the said second bar (6).

5. An optical unit for vehicles according to any one of claims 2 to 4, characterised in that the said securing means (23) comprises a slot (26) provided in the said first bar (5) which is capable of being snap engaged by an elastic securing member (27) borne by the said second bar (6).

6. An optical unit for vehicles according to any one of the foregoing claims, characterised in that it has anchorage members (31) for the optical unit (1).

## Patentansprüche

1. Eine optische Einheit für Fahrzeuge, umfassend einen ersten Scheinwerfer (2) und einen zweiten Scheinwerfer (3), dadurch gekennzeichnet, daß sie außerdem mindestens ein Verbindungsteil (4) umfaßt, das sich zwischen dem ersten Scheinwerfer (2) und dem zweiten Scheinwerfer (3) erstreckt und sie verbindet, welches Verbindungsteil (4) eine einstellbare Länge besitzt und seinerseits ein Sicherheitsteil (25) umfaßt für das Festlegen des Verbindungsteils (4) in einer Position, in der der erste Scheinwerfer (2) und der zweite Scheinwerfer (3) positioniert sind und integral voneinander mit einer vorbestimmten Distanz gehalten werden.

2. Eine optische Einheit für Fahrzeuge nach Anspruch 1, dadurch gekennzeichnet, daß das Verbindungsteil (4) eine erste Stange (5) und eine zweite Stange (6) umfaßt, von denen Jede sich von einem zugeordneten der Scheinwerfer (2) (3) in Richtung des anderen Scheinwerfers (3) (2) erstreckt.

3. Eine optische Einheit für Fahrzeuge nach Anspruch 2, dadurch gekennzeichnet, daß die erste Stange (5) und die zweite Stange (6) miteinander mittels einer axial gleitbeweglichen Kupplung verbunden sind.

4. Eine optische Einheit für Fahrzeuge nach einem der Ansprüche 2 oder 3, dadurch gekennzeichnet, daß die erste Stange (5) Führungsteile (21) für die zweite Stange (6) aufweist.

5. Eine optische Einheit für Fahrzeuge nach einem der Ansprüche 2 bis 4, dadurch gekennzeichnet, daß die Festlegungsmittel (23) einen Schlitz (26) umfassen, vorgesehen in der ersten Stange (5), der mittels eines elastischen Befestigungsgliedes (27), getragen von der zweiten Stange (6) durch Einschnappen festlegbar ist.

6. Eine optische Einheit für Fahrzeuge nach einem der vorangehenden Ansprüche, dadurch gekennzeichnet, daß sie Verankerungsmittel (31) für die optische Einheit (1) aufweist.

## Revendications

1. Bloc optique (1) pour véhicules automobiles, comprenant un premier phare (2) et un deuxième phare (3), caractérisé en ce qu'il comprend également au moins un organe de connexion (4) s'étendant entre et reliant ledit premier phare (2) et ledit deuxième phare (3); ledit organe de connexion (4) étant d'une longueur réglable et comprenant à son tour un organe de fixation (25) pour immobiliser ledit organe de connexion (4) en une position dans laquelle ledit premier phare (2) et ledit deuxième phare (3) sont situés et maintenus d'un seul tenant à une distance prédéterminée l'un par rapport à l'autre.

2. Bloc optique pour véhicules automobiles selon la revendication 1, caractérisé en ce que ledit organe de connexion (4) comprend une première barre (5) et une deuxième barre (6) s'étendant chacune depuis l'un desdits phares (2) (3) correspondants vers l'autre phare (3) (2).

3. Bloc optique pour véhicules automobiles selon la revendication 2, caractérisé en ce que ladite première barre (5) et ladite deuxième barre (6) sont reliées ensemble au moyen d'un couplage coulissant axialement.

4. Bloc optique pour véhicules automobiles selon l'une des revendications 2 ou 3, caractérisé en ce que ladite première barre (5) présente des organes de guidage (21) pour ladite deuxième barre (6).

5. Bloc optique pour véhicules automobiles selon l'une quelconque des revendications 2 à 4, caractérisé en ce que ledit moyen de fixation (23) comprend une fente (26) prévue dans ladite première barre (5) qui est capable d'être engagée par encliquetage par un organe de fixation (27) élastique supporté par ladite deuxième barre (6).

6. Bloc optique pour véhicules automobiles selon l'une quelconque des revendications précédentes, caractérisé en ce qu'il comporte des organes d'ancrage (31) pour le bloc optique (1).
